# EUROPEAN PATENT SPECIFICATION

(11) **EP 4 364 619 B1**
(45) Date of publication and mention of the grant of the patent: **16.07.2025**
(21) Application number: 22205670.7
(22) Date of filing: 04.11.2022
(51) Int. Cl.: A47J 31/36, A47J 31/44, A47J 31/46, A47J 31/60

(54) **BREWING UNIT FOR COFFEE BREWING**
BRÜHEINHEIT ZUM BRÜHEN VON KAFFEE
UNITÉ D'INFUSION POUR INFUSION DE CAFÉ

(43) Date of publication of application: 08.05.2024
(73) Proprietor: BSH Hausgeräte GmbH, 81739 München (DE)
(72) Inventor: Küchler, Christof, 83374 Traunwalchen (DE); Gouskos, Stamatis, 83301 Traunreut (DE)

(56) References cited:
- EP-A1- 1 867 257
- EP-A1- 3 733 032
- US-A1- 2006 117 960

## Description

The present invention relates to a brewing unit for use in a coffee machine which is adapted to make a coffee on the basis of interaction between beverage extract and an extracting fluid, the brewing unit comprising reciprocally, relatively movable a brewing chamber for receiving and accommodating a quantity of beverage extract and a brewing piston pressing beverage extract inside the brewing chamber, and an inlet port for letting in extracting fluid to the brewing chamber and an outlet port for letting out a prepared beverage and a pressure valve, called "crema valve" placing a restriction downstream of the brewing chamber therefore raising the pressure prevailing inside the brewing chamber.

In the field of brewing espresso coffee, the perception of quality is strongly related to the formation of a so-called crema layer, i.e. a thin layer of foam at the top level of the espresso coffee. A requirement in the formation of the crema layer is that the brewing process in which water is forced to flow through a quantity of beverage extract, namely ground coffee beans in order to obtain the espresso coffee takes place at a sufficiently high pressure. For this reason there is utilized a pressure valve a called crema valve, which involves placing a restriction downstream of the brewing chamber, i.e. the chamber where the brewing process takes place during operation. By having such a restriction, it is achieved that the pressure in the brewing chamber is always high enough for creating the crema layer, and that the brewing time is long enough for obtaining good taste. In many practical cases, the restriction is fixed,

Usually the crema valve being realized in the form of a spring-loaded valve, because this is simply and cheap solution, as is known from the document US2006117960A1, which discloses a brewing unit having a brewing chamber and a brewing piston which is equipped with a boiling water supply tube, a boiling water distribution chamber and with a boiling water distribution sieve. Piston shaped section on the underside of the carriage supplementing the brewing compartment is equipped with a brew discharge tube, a brew sieve and a brew collection chamber and a crema valve. The crema valve comprises a spring that acting on the ball pressing it towards a ball seat, and which restricts the beverage flow outside the brewing chamber, so it rises the pressure inside the brewing chamber. When the pressure inside the brewing chamber exceeds the appropriate value the crema valve is being opened for letting coffee to flow through the brew discharge tube. Both, the valve spring and the valve ball are placed in the stream of the beverage. A disadvantage of this solution is therefore that the flow is disturbed by the valve ball and the valve spring, and coffee particles can remain on the spring and be difficult to remove. Additionally, some coffee particles remain between the sieve and the crema valve, in a brew collecting chamber, during the brewing process and can be difficult to remove during the automatic cleaning process performed on the machine when the machine starts and stops, because the valve ball opens into a small flushing gap, so these particles are difficult to remove and they can block the sieve, therefore they can lead to a failure of the coffee machine.

The document EP3733032A1 discloses an automatic coffee machine for preparation of beverages comprising a pump, a brewing system with a brewing chamber, a set of valves including a crema valve, an external controller for the valves control, a steam generator, a cleaning system and a coffee line with a coffee spout, and a blow of the steam produced by the steam generator is set to the coffee line and the coffee spout in order to clean and preheat the coffee line and the coffee spout or to the brewing chamber, the coffee line and the coffee spout in order to clean and preheat the brewing chamber, the coffee line and the coffee spout. The invention provides an automatic and efficient system for cleaning and preheating the elements of the coffee machine The cleaning and preheating system of the coffee machine influences the quality of the beverage which leads to increased consumer satisfaction. The crema valve is the spring-loaded valve, which is controlled by the external controller for cleaning and preheating issues, when the steam pressure is not sufficient to open the crema valve. The disadvantage of this solution is that the solution is complicated, requires additional expensive components, which significantly increases the production costs.

It is an object of the invention to provide a brewing unit, especially a brewing unit for the coffee machine to solve the technical problems of the prior art. More concretely, the brewing unit currently used are difficult to clean automatically and/or expensive to manufacture and requires additional expensive such as electronic controllers.

In accordance with the present invention, there is provided a brewing unit for coffee machine comprising: a brewing chamber that is opened for filing ground coffee, a brewing piston that pressure-tightly closes the brewing chamber and moves reciprocally inside it, and can be adjusted between an open position, a brewing position and a cleaning position when it is at its deepest point within the brewing chamber, an inlet port for providing fresh hot water to the brewing chamber, an outlet port for brewed coffee, fluidly communicated with the brewing piston, a pressure valve with a valve chamber, that is placed in the brewing piston downstream of the brewing chamber and upstream of the outlet port, and the brewing piston has a lever, that is pivotally mounted therein and which is coupled with the pressure valve in order to be able to open it, and a lever free end extends outside of the brewing piston and stands transversally to movement of the brewing piston, when the brewing piston reaches the cleaning position the brewing chamber engages and moves the lever.

Advantageously, the pressure valve during a cleaning process of the brewing unit, i.e. when the brewing piston is in the cleaning position can be essentially opened by mechanical coupling the portion of the brewing chamber body with the free end of the lever part of the lever which lifts and holds the valve plunger with which it is coupled, on the predetermined distance to open the pressure valve, and to ensure free flow of the water through the brewing chamber, therefore the cleaning process is more effective. Merely during the cleaning process of the brewing unit, the brewing piston reaches the deepest point of the brewing chamber, in the contrast to other stage of working as the open position and the brewing position. At the brewing position, there is a layer of ground coffee inside the brewing chamber, so the brewing piston can't reach the deepest point at the cleaning position. Therefore only at the cleaning position the mechanical coupling between the brewing chamber body with the free end of the lever is possible. That causes that the solution is reliable and simple to implement in production.

In a preferred embodiment of the invention the pressure valve comprises, a stem and a valve plunger, which are connected together, and also comprises a seat with an opening, a spring pressing the valve plunger toward the seat, acting to close the opening, wherein the stem is provided with a one-way locking mean coupling it with the lever for opening the pressure valve. The positive effect is that the pressure valve works as a fully functional, known spring loaded valve, because the one-way locking mean does not interfere possibility it opening by the pressure of the hot water during for forming the foam.

Advantageously the free end of the stem is guided by a stem guide, that is arranged in the brewing piston, wherein a second end of the stem is connected with the valve plunger. The movement of the stem is supported, what prevents the valve plunger from blocking inside the valve chamber.

In the another preferred embodiment of the invention the valve plunger is moved along side walls of the valve chamber and is provided with a sealing that divides the valve chamber into an upper portion and a lower portion of the valve chamber in a sealing manner, wherein the lower portion of the valve chamber is fluidly communicated with the outlet port, and the upper portion of the valve chamber is fluidly isolated from the outlet port. The positive effect is shortening the flow path of the fluid through the pressure valve and bypassing some of it components, which could disturb fluid flow through the pressure valve, and can destroy the foam and are difficult to clean.

Advantageously a second end of the lever is supported on a support point in the vertical direction of the brewing piston and is arranged on an inner or outer side wall of the brewing piston, that constitutes rotation point for the lever when the free end of the lever is moved by the portion of the brewing chamber body. It provides simple and reliable solution, that is easy to implement in the production. Additionally a second end of the lever can be supported at the support point in the horizontal direction of the brewing piston what prevents from sideways movement of the lever.

In a preferred embodiment of the invention the lever is placed inside the brewing piston, approximately transversely to its side walls, and is in the shape of a board or a rod, and is coupled with the pressure valve by the coupling mean between ends of the lever. The positive effect is that the solution is easy for assembling and reliable due to the small number of cooperating elements.

Advantageously the brewing piston has a body with an outer cylindrical shape, that is closed from the bottom by a bottom wall centrally having the opening, in a front of which a sieve is mounted on the bottom wall with a gap between the sieve and the bottom wall forming a brew collecting chamber, and additionally comprises the brewing chamber having an inner cylindrical shape for receiving the brewing piston, wherein a sealing arranged on the brewing piston provides tight connection for the brewing piston inside the brewing chamber. The positive effect is in that making tools for producing cylindrical parts are cheaper and faster and also a sealing reciprocally cooperating two cylindrical parts are easier and effective than on the other shape.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a cross-sectional view of a brewing unit in the open position with accordance with the preferred embodiment of the present invention.
Fig. 2 is a cross-sectional view of the brewing unit as shown in Fig.1 in the cleaning position.

A coffee machine, not further depicted here, has a brewing unit 1. The brewing unit 1 is only represented in the Figures with the elements essential to the description of the invention.

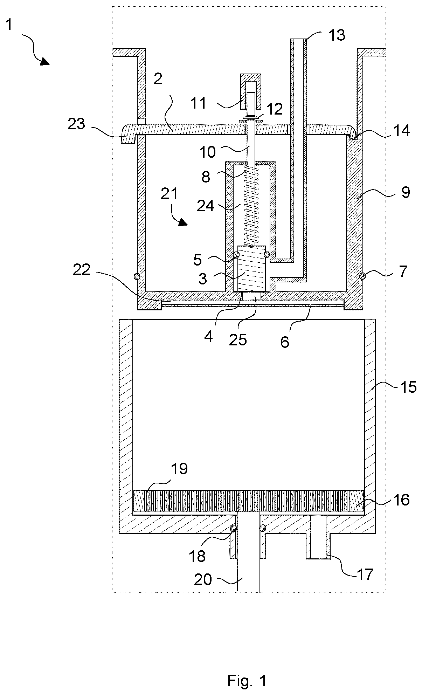

Referring to the drawings Figs.1-2, a brewing unit 1 for coffee machine in accordance with the preferred embodiment of the present invention comprises a brewing chamber 15, that is opened from above for filing ground coffee, a brewing piston 9 that pressure-tightly closes the brewing chamber 15, and moves reciprocally inside it in a slide manner.

The brewing piston 9 having a body of cylindrical shape on an outside, and is closed from the bottom side by a bottom wall, having centrally arranged an opening 25, in a front of which, a sieve 6 is mounted on the bottom wall, with a gap between the sieve 6 and the bottom wall, forming a brew collecting chamber 22.

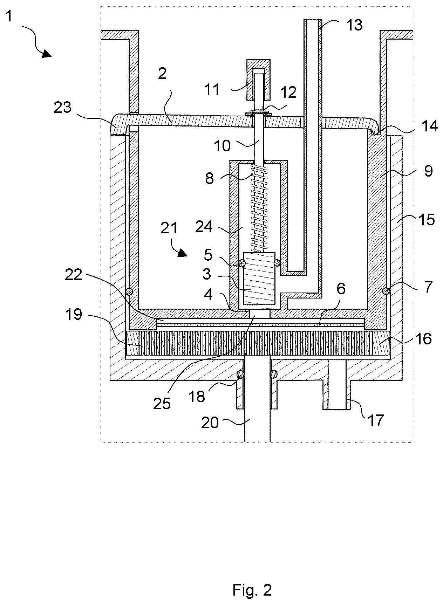

The brewing chamber 15 having a body with a chamber of a cylindrical shape for receiving the brewing piston 9, wherein a sealing 7 arranged on the brewing piston 9 provides tight connection for the brewing piston 9 inside the brewing chamber 15. The brewing piston 9 can be adjusted with respect to brewing chamber 15 between an open position, i.e. when the brewing piston 9 is outside of the brewing chamber 15, as presented in Fig.1. At this position the brewing chamber 15 can be fed with ground coffee, and also the coffee grounds can be removed after brewing. Another position of the brewing piston 9 is a brewing position (not shown in drawings), i.e. when the brewing piston 9 is moved inside, toward the bottom wall of the brewing chamber 15. In that position ground coffee inside the brewing chamber 15 is pressed by the brewing piston 9. Another position is a cleaning position, then the brewing chamber 15 is empty, and therefore the brewing piston 9 reaches the deepest point within the brewing chamber 15 as presented in Fig.2.

The brewing unit 1 also comprises an inlet port 17 for providing fresh hot water to the brewing chamber 15, an outlet port 13 fluidly communicated with the brewing piston 9 by the opening 25, both are arranged for brewing and cleaning purposes. And additionally comprises a lifting piston 16 having series of distribution holes 19 for passing hot water flowing from the inlet port 17 towards the brewing piston 9, and a lifting piston shaft 20, that is sealed in a bottom of the brewing chamber 15 by a sealing 18. The lifting piston shaft 20 provides a reciprocal movement back and forth of the lifting piston 16, essentially for removing coffee grounds from the brewing chamber 15, after brewing the coffee.

The brewing unit 1 is provided with a lever 2, that is pivotally mounted inside the brewing piston 9 and extends transversally to its axis. The lever 2 is in the shape of a rod. A lever free end 23 extends outside of the brewing piston 9, and stands transversally to movement of the brewing piston 9, and a second end of the lever 2 is supported in the vertical and horizontal direction on a support point 14. The support point 14 is arranged on an inner side wall of the brewing piston 9.

The brewing unit 1 also comprises a pressure valve 21, that is essentially responsible for forming thin layer of foam at the top level of the espresso coffee and quality of the beverage. The pressure valve 21 is implemented in the brewing piston 9, downstream of the brewing chamber 15, and located upstream of the outlet port 13. The pressure valve 21 is a spring-loaded valve that comprises a cylindrical valve chamber 24, which extends along the axis of the brewing piston 9, and comprises a valve plunger 3, with a stem 10 placed inside the valve chamber 24, and also a spring 8 which is applied on the stem 10, and that acting on the valve plunger 3, pressing it towards a seat 4 for closing the opening 25, and which restricts the beverage flow outside the brewing chamber 15, so it rises the pressure inside the brewing chamber 15, therefore creates conditions for the formation of foam. The stem 10 is provided with a one-way locking mean 12 coupling it with the lever 2 in the middle of the ends of the lever 2. A free end of the stem 10 is guided by a stem guide 11, that is arranged in the brewing piston 9, wherein a second end of the stem 10 is connected with the valve plunger 3. The valve plunger 3 is moved along the axis of the valve chamber 24 and is provided with a sealing 5, that divides the valve chamber 24 into an upper portion and a lower portion of the valve chamber in a sealing manner. The lower portion of the valve chamber 24 is fluidly communicated with the outlet port 13, and the upper portion of the valve chamber 24 is fluidly isolated from the outlet port 13, therefore the flow path of the fluid has been shortened and the stem 10 and the spring 8 have been bypassed. When the brewing piston 9 is in the cleaning position, namely reaches the deepest point inside the brewing chamber 15, a portion of the body of the brewing chamber 15 engages the lever free and 23, and moves the lever 2, which lifts the valve plunger 3 and the opening 25 is opened for cleaning the brewing unit 1, as it is presented in Fig. 2. In other positions of the brewing piston 9, the lever free end 23 is not pressed, therefore only at the cleaning position the mechanical coupling between the body of the brewing chamber 15 with the free end 23 of the lever 2 is possible.

Advantageously, during a cleaning process of the brewing unit, i.e. when the brewing piston is in the cleaning position, the pressure valve can be essentially opened by mechanical coupling the portion of the brewing chamber body with the free end of the lever which lifts and holds the valve plunger with which it is coupled, on the predetermined distance to open the pressure valve, to ensure free flow of the water through the brewing chamber therefore the cleaning process is more effective. Additionally bypassing some of the pressing valve components, has a positive effect on the smooth fluid flow through the pressure valve for forming the layer of foam at the top level of the espresso coffee. The brewing unit has been described in conjunction with a coffee machine comprising such brewing unit. The described brewing unit having a pressure valve, that can be mechanically opened in a proper operational mode can also be employed with the same advantages for brewing units of other beverage preparation machines, in which a brewing chamber and a brewing piston, moved relative to one another, are used.

Although the invention has been explained in relation to its preferred embodiment as mentioned above, it is to be understood that many other possible modifications and variations can be made without departing from the scope of the present invention, which is defined by the appended claims.

### List of reference signs

- 1: brewing unit
- 2: lever
- 3: valve plunger
- 4: valve seat
- 5, 7, 18: sealing
- 6: sieve
- 8: spring
- 9: brewing piston
- 10: stem
- 11: stem guide
- 12: locking mean
- 13: outlet port
- 14: support point
- 15: brewing chamber
- 16: lifting piston
- 17: inlet port
- 19: distribution hole
- 20: lifting piston shaft
- 21: pressure valve, crema valve
- 22: brew collecting chamber
- 23: lever free end
- 24: valve chamber
- 25: opening

## Claims

1. A brewing unit (1) for coffee machine comprising: a brewing chamber (15) that is opened for filing ground coffee, a brewing piston (9) that pressure-tightly closes the brewing chamber (15) and moves reciprocally inside it, and can be adjusted between an open position, a brewing position and a cleaning position when it is at its deepest point within the brewing chamber (15), an inlet port (17) for providing fresh hot water to the brewing chamber (15), an outlet port (13) for brewed coffee, fluidly communicated with the brewing piston (9), a pressure valve (21) with a valve chamber (24), that is placed in the brewing piston (9) downstream of the brewing chamber (15) and upstream of the outlet port (13), **characterized in that** the brewing piston (9) has a lever (2) that is pivotally mounted therein and which is coupled with the pressure valve (21) in order to be able to open it, and **in that** a lever free end (23) extends outside of the brewing piston (9) and stands transversally to movement of the brewing piston (9), when the brewing piston (9) reaches the cleaning position, the brewing chamber (15) engages and moves the lever (2).

2. The brewing unit according to claim 1, **characterized in that** the pressure valve (21) comprises, a stem (10) and a valve plunger (3), which are connected together, and also comprises a seat (4) with an opening (25), a spring (8) pressing the valve plunger (3) toward the seat (4) acting to close the opening (25), wherein the stem (10) is provided with a one-way locking mean (12) coupling it with the lever (2) for opening the pressure valve (21).

3. The brewing unit according to claim 2, **characterized in that** a free end of the stem (10) is guided by a stem guide (11), that is arranged in the brewing piston (9), wherein a second end of the stem (10) is connected with the valve plunger (3).

4. The brewing unit according to any of claims 2 or 3, **characterized in that** the valve plunger (3) is provided with a sealing (5) that divide the valve chamber (24) into an upper portion and a lower portion of the valve chamber (24), and is moved inside the valve chamber in a sealing manner, wherein the lower portion of the valve chamber (24) is fluidly communicated with the outlet port (13), and the upper portion of the valve chamber (24) is fluidly isolated from the outlet port (13).

5. The brewing unit according to any of the preceding claims **characterized in that** a second end of the lever (2) is supported on a support point (14) in the vertical direction of the brewing piston (9) and is arranged on an inner or outer side wall of the brewing piston (9).

6. The brewing unit according to claim 5 **characterized in that** a second end of the lever (2) is supported on the support point (14) in the horizontal direction of the brewing piston (9).

7. The brewing unit according to any of the preceding claims **characterized by** the lever (2) that is placed inside the brewing piston (9) extends approximately transversely to its side walls is in the shape of a board or a rod, and is coupled with the pressure valve (21) by the coupling mean (12) between the ends of the lever (2).

8. The brewing unit according to any of the preceding claims **characterized in that** the brewing piston (9) having a body with an inner cylindrical shape, and that is closed from a bottom side by a bottom wall, centrally having the opening (25), in a front which a sieve (6) is mounted on the bottom wall with a gap between the sieve (6) and the bottom wall forming a brew collecting chamber (22), and additionally comprises the brewing chamber (15) having a body with an inner cylindrical shape for receiving the brewing piston (9), wherein a sealing (7) arranged on the brewing piston (9) provides tight connection for the brewing piston (9) inside the brewing chamber (15).

9. A coffee machine, comprising the brewing unit according to one of the claims 1-8.

## Patentansprüche

1. Brüheinheit (1) für eine Kaffeemaschine mit Folgendem: einer Brühkammer (15), die zum Einfüllen von gemahlenem Kaffee geöffnet wird, einem Brühkolben (9), der die Brühkammer (15) druckdicht verschließt und sich darin hin und her bewegt und zwischen einer offenen Position, einer Brühposition und einer Reinigungsposition, in er sich an seiner tiefsten Stelle in der Brühkammer (15) befindet, verstellt werden kann, einem Einlassstutzen (17) zum Bereitstellen von frischem Heißwasser für die Brühkammer (15), einem Auslassstutzen (13) für gebrühten Kaffee, die mit dem Brühkolben (9) strömungstechnisch verbunden ist, einem Druckventil (21) mit einer Ventilkammer (24), die stromabwärts von der Brühkammer (15) und stromaufwärts von dem Auslassstutzen (13) in dem Brühkolben (9) angeordnet ist, **dadurch gekennzeichnet, dass** der Brühkolben (9) einen Hebel (2) aufweist, der schwenkbar darin installiert und mit dem Druckventil (21) gekoppelt ist, damit er dieses öffnen kann, und dass sich ein freies Hebelende (23) aus dem Brühkolben (9) heraus erstreckt und quer zur Bewegung des Brühkolbens (9) liegt und die Brühkammer (15), wenn der Brühkolben (9) die Reinigungsposition erreicht, an dem Hebel (2) anliegt und diesen bewegt.

2. Brüheinheit nach Anspruch 1, **dadurch gekennzeichnet, dass** das Druckventil (21) einen Schaft (10) und einen Ventilstößel (3), die miteinander verbunden sind, sowie einen Sitz (4) mit einer Öffnung (25) umfasst, wobei eine Feder (8), die den Ventilstößel (3) zum Sitz (4) hin drückt, dazu dient, die Öffnung (25) zu schließen, wobei der Schaft (10) mit einem einfachen Verriegelungsmittel (12) versehen ist, über das er zum Öffnen des Druckventils (21) mit dem Hebel (2) gekoppelt ist.

3. Brüheinheit nach Anspruch 2, **dadurch gekennzeichnet, dass** ein freies Ende des Schafts (10) von einer Schaftführung (11) geführt wird, die in dem Brühkolben (9) angeordnet ist, wobei ein zweites Ende des Schafts (10) mit dem Ventilkolben (3) verbunden ist.

4. Brüheinheit nach Anspruch 2 oder 3, **dadurch gekennzeichnet, dass** der Ventilkolben (3) mit einer Dichtung (5) versehen ist, die die Ventilkammer (24) in einen oberen und einen unteren Abschnitt der Ventilkammer (24) unterteilt, und auf abdichtende Weise in der Ventilkammer bewegt wird, wobei der untere Abschnitt der Ventilkammer (24) strömungstechnisch mit dem Auslassstutzen (13) verbunden und der obere Abschnitt der Ventilkammer (24) von dem Auslassstutzen (13) strömungstechnisch getrennt ist.

5. Brüheinheit nach einem der vorhergehenden Ansprüche, **dadurch gekennzeichnet, dass** ein zweites Ende des Hebels (2) an einem Auflagepunkt (14) in vertikaler Richtung des Brühkolbens (9) abgestützt und an einer innen- oder außenliegenden Seitenwand des Brühkolbens (9) angeordnet ist.

6. Brüheinheit nach Anspruch 5, **dadurch gekennzeichnet, dass** ein zweites Ende des Hebels (2) in horizontaler Richtung des Brühkolbens (9) an dem Auflagepunkt (14) aufliegt.

7. Brüheinheit nach einem der vorhergehenden Ansprüche, **dadurch gekennzeichnet, dass** der Hebel (2), der in dem Brühkolben (9) angeordnet ist, sich in etwa quer zu seinen Seitenwänden erstreckt, die Form einer Platte oder einer Stange aufweist und über das Kopplungsmittel (12) zwischen den Enden des Hebels (2) mit dem Druckventil (21) gekoppelt ist.

8. Brüheinheit nach einem der vorhergehenden Ansprüche, **dadurch gekennzeichnet, dass** der Brühkolben (9) einen Hauptteil von zylindrischer Innenform aufweist, der von einer Unterseite her durch eine Bodenwand verschlossen ist, die in der Mitte die Öffnung (25) aufweist, vor der ein Sieb (6) an der Bodenwand angebracht ist, wobei ein Spalt zwischen dem Sieb (6) und der Bodenwand eine Brühauffangkammer (22) bildet, und zusätzlich die Brühkammer (15) mit einem Hauptteil von zylindrischer Innenform zum Aufnehmen des Brühkolbens (9) umfasst, wobei eine an dem Brühkolben (9) angeordnete Dichtung (7) in der Brühkammer (15) für eine dichte Verbindung des Brühkolbens (9) sorgt.

9. Kaffeemaschine, die die Brüheinheit nach einem der Ansprüche 1-8 umfasst.

## Revendications

1. Unité de brassage (1) pour machine à café comprenant : une chambre de brassage (15) qui est ouverte pour déposer du café moulu, un piston de brassage (9) qui ferme de façon étanche à la pression la chambre de brassage (15) et se déplace réciproquement à l'intérieur de celle-ci, et peut être réglé entre une position ouverte, une position de brassage et une position de nettoyage lorsqu'il est à son point le plus profond dans la chambre de brassage (15), une lumière d'entrée (17) pour fournir de l'eau chaude fraîche à la chambre de brassage (15), une lumière de sortie (13) pour le café brassé, en communication fluidique avec le piston de brassage (9), une soupape de pression (21) avec une chambre de soupape (24), qui est placée dans le piston de brassage (9) en aval de la chambre de brassage (15) et en amont de la lumière de sortie (13), **caractérisée en ce que** le piston de brassage (9) a un levier (2) qui est monté de façon pivotante à l'intérieur de celui-ci et qui est couplé à la soupape de pression (21) pour permettre de l'ouvrir, et **en ce qu'**une extrémité libre du levier (23) s'étend à l'extérieur du piston de brassage (9) et se trouve transversalement au mouvement du piston de brassage (9), lorsque le piston de brassage (9) atteint la position de nettoyage, la chambre de brassage (15) s'engage et déplace le levier (2).

2. Unité de brassage selon la revendication 1, **caractérisée en ce que** la soupape de pression (21) comprend une tige (10) et une tige de commande (3), qui sont reliées ensemble, et comprend également un siège (4) avec une ouverture (25), un ressort (8) pressant la tige de commande (3) vers le siège (4) agissant pour fermer l'ouverture (25), dans laquelle la tige (10) est dotée d'un moyen de verrouillage unidirectionnel (12) l'accouplant au levier (2) pour l'ouverture de la soupape de pression (21).

3. Unité de brassage selon la revendication 2, **caractérisée en ce qu'**une extrémité libre de la tige (10) est guidée par un guide de tige (11), qui est disposé dans le piston de brassage (9), dans laquelle une deuxième extrémité de la tige (10) est reliée à la tige de commande (3).

4. Unité de brassage selon l'une quelconque des revendications 2 ou 3, **caractérisée en ce que** la tige de commande (3) est dotée d'un joint (5) qui divise la chambre de soupape (24) en une partie supérieure et une partie inférieure de la chambre de soupape (24), et est déplacée à l'intérieur de la chambre de soupape de façon étanche, dans laquelle la partie inférieure de la chambre de soupape (24) est en communication fluidique avec la lumière de sortie (13), et la partie supérieure de la chambre de soupape (24) est isolée fluidiquement de la lumière de sortie (13).

5. Unité de brassage selon l'une quelconque des revendications précédentes, **caractérisée en ce qu'**une deuxième extrémité du levier (2) est appuyée sur un point d'appui (14) dans le sens vertical du piston de brassage (9) et est disposée sur une paroi latérale intérieure ou extérieure du piston de brassage (9).

6. Unité de brassage selon la revendication 5, **caractérisée en ce qu'**une deuxième extrémité du levier (2) est appuyée sur le point d'appui (14) dans le sens horizontal du piston de brassage (9).

7. Unité de brassage selon l'une quelconque des revendications précédentes, **caractérisée en ce que** le levier (2) qui est placé à l'intérieur du piston de brassage (9) s'étend approximativement transversalement à ses parois latérales, a la forme d'une planche ou d'un bâton, et est couplé à la soupape de pression (21) par le moyen de couplage (12) entre les extrémités du levier (2).

8. Unité de brassage selon l'une quelconque des revendications précédentes, **caractérisée en ce que** le piston de brassage (9) a un corps avec une forme intérieure cylindrique, et qui est fermé d'un côté inférieur par une paroi de fond, ayant au centre l'ouverture (25), devant laquelle un tamis (6) est monté sur la paroi de fond avec un espace entre le tamis (6) et la paroi de fond formant une chambre de collecte du brassin (22), et comprend en outre la chambre de brassage (15) ayant un corps de forme intérieure cylindrique pour recevoir le piston de brassage (9), dans laquelle un joint (7) disposé sur le piston de brassage (9) assure une connexion étanche pour le piston de brassage (9) à l'intérieur de la chambre de brassage (15).

9. Machine à café comprenant l'unité de brassage selon l'une des revendications 1 à 8.
